# EUROPÄISCHE PATENTSCHRIFT

(11) **EP 2 418 038 B1**
(45) Veröffentlichungstag und Bekanntmachung des Hinweises auf die Patenterteilung: **25.03.2015**
(21) Anmeldenummer: 11187996.1
(22) Anmeldetag: 06.09.2002
(51) Int. Cl.: B23K 9/095, B23K 9/10

(54) **Schweißgerät mit einer Bedieneinheit ; Verfahren zum Einstellen eines Schweissgerätes durch eine Bedieneinheit**
Welding device with an operating unit ; Method of preparing a welding device using a operating unit
Apareil de soudage avec une unité de commande ; Méthode de préparation d'un appareil de soudage à l'aide d'une unité de commande

(30) Priorität: 12.09.2001 AT 14372001
(43) Veröffentlichungstag der Anmeldung: 15.02.2012
(62) Teilanmeldung aus: 02774134.7
(73) Patentinhaber: Fronius International GmbH, 4643 Pettenbach (AT)
(72) Erfinder: Niedereder, Franz, 4652 Fischlham (AT); Pernkopf, Gerald, 4573 Hinterstoder (AT); Prinz, Andreas, 4501 Neuhofen an der Krems (AT)
(74) Vertreter: Burger, Hannes

(56) Entgegenhaltungen:
- WO-A1-01/34337
- WO-A2-99/58285
- DE-A1- 19 602 876
- JP-A- 11 047 950
- US-A- 4 717 805
- US-A- 6 002 104
- US-A- 6 103 994

## Beschreibung

Die Erfindung betrifft ein Schweißgerät, sowie ein Verfahren zum Einstellen eines Schweißgerätes durch einen multifunktionalen Fernregler/eine multifunktionale Bedieneinheit, wie sie in dem Oberbegriff der Ansprüchen 1 und 26 beschrieben sind (siehe DE 196 02 876 A1).

In der Schweißtechnologie sind verschiedenste Arten von Einstellarten bekannt, bei denen meist immer nur eine begrenzte Einstellmöglichkeit, direkt am Schweißgerät vorhanden ist. Oft ist es auch möglich, daß am Schweißgerät auch betriebsinterne Parameter oder Funktionen, die nicht durch eigene Verstellorgane an der Ein- und/oder Ausgabevorrichtungen ausgeführt sind, verstellt bzw. angeschaut werden können. Diese müssen meist durch komplizierte Vorgänge, beispielsweise durch Betätigen mehrerer Taster oder durch mehrmaliges Drücken eines Tasters, serienweise durch eine sehr komplizierte und unübersichtliche Bedienung vom Benutzer aufgerufen werden.

Dabei sind aus der AT 406 942 B, der DE 91 16 973 U1 und der DE 92 17 846 U1 Fernregler zur Einstellung bzw. Verstellung zumindest eines Parameters bekannt, wobei hierzu der Fernregler mit den Schweißleitungen, insbesondere mit einer Schweißleitung und dem Werkstück, kontaktiert wird. Der zwischengeschaltete Fernregler wird dabei automatisch vom Schweißgerät erkannt, wodurch eine beschränkte Stromversorgung über die Schweißleitungen vom Schweißgerät gewährleistet wird. Die Verstellung am Fernregler erfolgt dabei über ein Drehrad bzw. ein Potentiometer oder über einen Taster, wobei spezielle Signale an das Schweißgerät über die Schweißleitungen übersandt werden, die anschließend im Schweißgerät ausgewertet werden und eine entsprechende Verstellung vorgenommen wird. Bei dieser Art von Fernregler ist meist nur ein einziger Schweißparameter verstellbar bzw. ist nur eine beschränkte Anzahl von Parametern einstellbar.

Weiters ist aus der DE 44 35 353 C2 eine Anordnung zur Fernsteuerung von Schweißgeräten bekannt, bei der der Fernregler über einen Lichtleiter mit dem Schweißgerät verbunden wird. Hierbei erfolgt die Datenübertragung über Lichtsignale, die im Fernregler erzeugt werden und anschließend wiederum im Schweißgerät ausgewertet werden müssen.

Aus der DE 94 15 226 U1 ist ein Fernregler für einen Automatenträger einer Schweißvorrichtung mit einem vertikalen und/oder horizontalen verfahrbaren und drehbaren Ausleger bekannt, bei dem die Datenübertragung drahtlos erfolgt. Die Steuerung für die Bewegung des Die Aufgabe der Erfindung wird dadurch gelöst, daß der Fernregler einen Speicher, insbesondere eine Speicherkarte, aufweist, und daß zumindest eine zusätzliche Schnittstelle, insbesondere eine USB-Anschluß, angeordnet ist, und daß die Einstellung bzw. Verstellung der verschiedensten Parameter, Funktionen und Betriebsarten menügeführt ist.

Die Aufgabe der Erfindung wird auch dadurch gelöst, daß die Einstellung bzw. Verstellung der verschiedensten Parameter, Funktionen und/oder Betriebsarten menügeführt ist

Gemäß der Erfindung ist ein Schweißgerät gemäß Anspruch 1 definiert, wobei durch die menügeführte Darstellung der Parameter, Funktionen und Betriebsarten eine sehr übersichtliche und sehr einfache Bedienung des Fernreglers erreicht wird und somit auch ungeübte Benutzer bzw. Schweißer sich leicht zurecht finden und das gesamte Spektrum des Schweißgerätes nützen können. Ein weiterer Vorteil liegt darin, daß durch die Anordnung eines Speichermediums, insbesondere einer Speicherkarte, auch Einstellungen vorgenommen werden können, wenn der Fernregler nicht am Schweißgerät angeschlossen ist bzw. das der Benutzer direkt am Fernregler spezielle Einstellungen speichern kann, die er anschließend beim Verbinden des Fernreglers mit einem Schweißgerät verwenden kann.

Vorteilhaft ist auch eine Ausbildung gemäß Anspruch 2, da dadurch eine kostengünstige Baugruppe eingesetzt werden kann und auch die graphische Darstellung realisiert werden kann.

Von Vorteil ist auch eine Ausgestaltung nach Anspruch 3, da dadurch über den Fernregler alle möglichen Einstellungen vorgenommen werden können und somit eine Einstellung direkt am Schweißgerät entfallen kann.

Durch die Ausgestaltung nach Anspruch 4 wird in vorteilhafter Weise erreicht, daß durch die Anzeige von Menüpunkten, die durch Symbole graphisch dargestellt sind, sich ein Benutzer sehr leicht zurecht finden kann.

Vorteilhaft ist auch eine Ausgestaltung nach dem Anspruch 5 eine bedienerfreundliche, strukturierte Bedieneroberfläche geschaffen wird, wobei durch die Aufgliederung in zwei Ebenen eine übersichtliche und einfache Bedienung möglich ist.

Es ist auch eine Ausgestaltung nach Anspruch 6 von Vorteil, da dadurch in einfacher Form eine Ergänzung des Fernreglers durch neue Parameter, Betriebsarten bzw. Funktionen erfolgen kann, ohne daß dabei die Grundstruktur der Bedieneroberfläche verändert werden muß.

Durch die Ausgestaltung nach den Ansprüchen 7 und 8 wird in vorteilhafter Weise erreicht, daß eine Übersichtsliste für die Einstellungen des Schweißgerätes in der ersten Ebene, insbesondere in der Hauptebene, dargestellt wird und erst nach Auswahl eines Punktes entsprechende Einstellungen vorgenommen werden können.

Es ist auch eine Ausgestaltung nach Anspruch 9 von Vorteil, da dadurch für die Bedienung des Fernreglers nur eine beschränkte Anzahl von Schaltelementen notwendig ist, so daß eine kostengünstige Herstellung gewährleistet ist.

Von Vorteil ist auch eine Ausgestaltung nach Anspruch 10, da dadurch jederzeit aus jedem Menüpunkt in die Hauptebene zurückgekehrt werden kann und somit die Bedienerfreundlichkeit wesentlich erhöht wird.

Vorteilhaft ist auch eine Ausgestaltung nach einem der Ansprüchen 11 oder 12, da dadurch der Benutzer die Möglichkeit erhält, zusätzliche Informationen zu dem ausgewählten Menüpunkt zu erhalten und somit eine Fehleinstellung leicht vermieden werden kann.

Durch die Ausgestaltung nach den Anspruch 13 bis 15 wird in vorteilhafter Weise erreicht, daß der Benutzer immer nur auf jene Menüpunkte zugreifen kann, die für ihn freigegeben wurden.

Es ist auch ein Ausgestaltung nach Anspruch 16 von Vorteil, da dadurch in einfacher Form eine Erweiterung oder Anpassung der Struktur der Oberfläche vorgenommen werden kann und somit der Kunde sich seine eigene Oberfläche frei gestalten kann.

Von Vorteil ist auch eine Ausgestaltung nach Anspruch 17, da dadurch keinerlei Tätigkeiten für die Übertragung zum Schweißgerät notwendig sind und somit dem Benutzer das Gefühl vermittelt wird, daß er die Einstellungen direkt am Schweißgerät vorgenommen hat.

Weiters wird die Aufgabe der Erfindung auch dadurch gelöst, daß die Einstellung und Vergabe der Berechtigung bzw. der Profile über den Fernregler erfolgt, und daß der Benutzer je nach eingestelltem Profil am Fernregler nur auf die für dieses Profil freigegebenen Menüpunkte zugreifen kann und die weiteren deaktivierten Menüpunkte ausgeblendet werden oder diese inaktiv hinterlegt werden.

Vorteilhaft ist hierbei, daß für die unterschiedlichsten Berechtigungen immer eine sehr übersichtliche Oberfläche geschaffen wird und somit die Bedienung sehr benutzerfreundlich aufgebaut ist.

Die Aufgabe der Erfindung wird jedoch auch dadurch gelöst, daß sämtliche Parameter bzw. Einstellmöglichkeiten des Schweißgerätes bzw. der Schweißstromquelle über den Fernregler eingestellt werden, wobei die Auswahl der unterschiedlichen Parameter, Funktionen und/oder Betriebsarten in zumindest zwei Ebenen, insbesondere in einer Hauptebene und einer Arbeitsebene, erfolgt und diese in Form von Menüpunkten an der Anzeigevorrichtung dargestellt werden.

Weiters wird die Aufgabe der Erfindung auch dadurch gelöst, daß bei dem Fernregler oder der Bedieneinheit durch Betätigen eines speziellen Schaltelementes, insbesondere einer Hilfetaste bzw. einer Infotaste, zu dem gerade ausgewählten Menüpunkt bzw. der ausgewählten Karteikarte ein Informationstext oder zusätzliche Parameter oder Istwerte aufgerufen werden.

Vorteilhaft ist bei dem Verfahren gemäß den Ansprüchen 19 oder 20, daß dadurch eine einfache und benutzerfreundliche Oberfläche vorhanden ist und dem Benutzer sämtliche Einstellmöglichkeiten, wie sie auch am Schweißgerät durchgeführt werden können, über den Fernregler zur Verfügung stehen. Ein weiterer Vorteil liegt darin, daß durch die menügeführte Oberfläche eine automatische Anpassung der Struktur bzw. Oberfläche, je nach Berechtigung des Benutzers, möglich ist.

Von Vorteil ist auch ein Vorgehen nach Anspruch 21, da dadurch die Änderungen bzw. Einstellung immer sofort am Schweißgerät zur Verfügung stehen und der Schweißer bzw. Benutzer jederzeit den Schweißprozeß starten kann.

Von Vorteil ist auch ein Vorgehen nach Anspruch 22, da dadurch mit wenigen Schaltelementen eine einfache Navigation möglich ist.

Vorteilhaft sind auch die Maßnahmen gemäß dem Anspruch 23, da dadurch der Benutzer mit einem Tastendruck immer wieder in eine bestimmte Ebene bzw. zu einer bestimmten Karteikarte zurückkehren kann, was bei unterschiedlichen Ebenen zu einer wesentlichen Verbesserung der Bedienung führt.

Es ist auch ein Vorgehen nach Anspruch 24 von Vorteil, da dadurch eine leichte Bedienung möglich ist.

Von Vorteil ist auch ein Vorgehen gemäß Anspruch 25, da dadurch für die verschiedensten Karteikarten immer die möglichen Funktionen ausgewählt werden können und somit eine sehr flexible Oberflächengestaltung mit wenigen Schaltelementen erreicht werden kann.

Die Erfindung definiert auch ein Verfahren gemäß dem Anspruch 26.

Schließlich ist auch ein Vorgehen gemäß den Ansprüchen 27 bis 29 vorteilhaft, da dadurch eine wesentliche Verbesserung der Bedienung auch bei Schweißgeräten bzw. Ein- und/oder

Ausgabevorrichtungen mit fix vorgegebener Bedieneroberfläche erreicht wird.

Die Erfindung wird anhand von Ausführungsbeispielen näher erläutert.

Es zeigen:
- Fig. 1: eine schematische Darstellung eines erfindungsgemäßen, multifunktionalen Schneid- und/oder Schweißgerätes;
- Fig. 2: eine schematische Darstellung des Fernreglers mit der Anzeigevorrichtung in der ersten Ebenen, insbesondere in der Hauptebene;
- Fig. 3: eine weitere schematische Darstellung des Fernreglers mit der Anzeigevorrichtung in der zweiten Ebene, insbesondere in der Arbeitsebene;
- Fig. 4: ein weiteres Beispiel des Fernreglers;
- Fig. 5: ein Ausführungsbeispiel, gemäß der Erfindung, für die Einstellung eines Schweißgerätes.

Einführend wird festgehalten, daß gleiche Teile, Zustände bzw. Menüpunkte der Ausführungsbeispiele mit gleichen Bezugszeichen versehen werden.

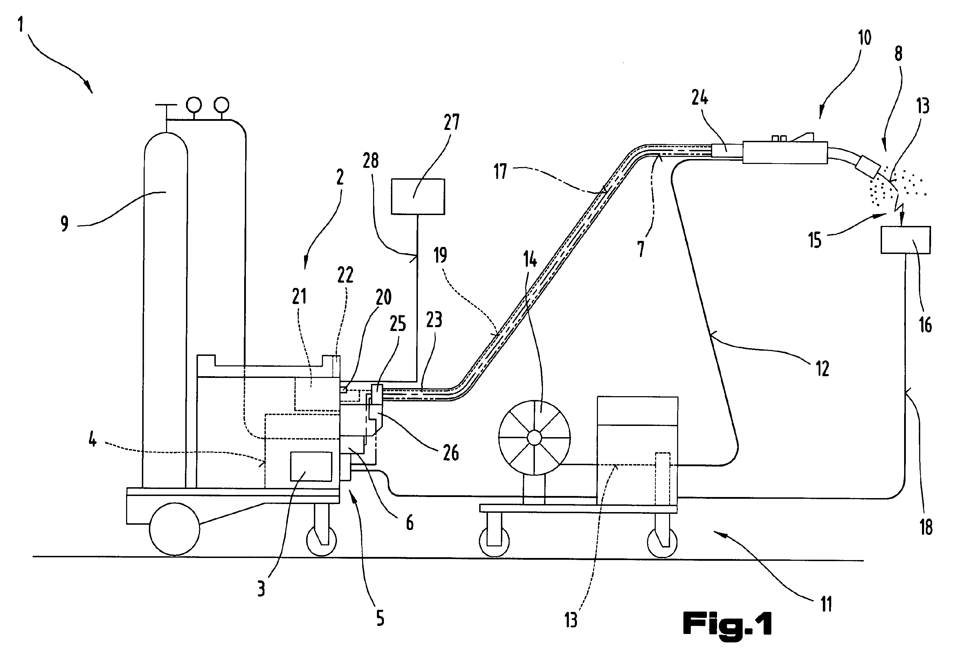

In Fig. 1 ist eine Schweißanlage bzw. ein Schweißgerät 1 mit einer am Schweißgerät 1 angeschlossene bzw. integrierte erfindungsgemäße Komponente dargestellt. Dabei ist die Schweißanlage bzw. das Schweißgerät 1 für verschiedenste Schweißverfahren, wie z.B. MIG/MAG-Schweißen bzw. WIG/TIG-Schweißen oder Elektroden-Schweißverfahren usw., dargestellt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Schweißstromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Schweißleitung 17 vom Leistungsteil 3 der Schweißstromquelle 2 dem Schweißbrenner 10 bzw. dem Schweißdraht 13 zugeführt, wobei das zu verschweißende Werkstück 16 über eine weitere Schweißleitung 18 ebenfalls mit dem Schweißgerät 1, insbesondere mit der Schweißstromquelle 2, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine, für die im Wasserbehälter 21 angeordnete Flüssigkeit, verwendete Flüssigkeitspumpe, gestartet wird und somit eine Kühlung des Schweißbrenners 10 bzw. des Schweißdrahtes 13 bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet, und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungseinrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

Weiters ist aus Fig. 1 ersichtlich, daß die erfindungsgemäße Komponente bei dem dargestellten Ausführungsbeispiel durch einen multifunktionalen Fernregler 27 gebildet ist, der über Leitungen 28 mit dem Schweißgerät 1 verbunden ist. Selbstverständlich ist es möglich, daß dieser Fernregler 27 als Bedieneinheit bzw. Ein- und/oder Ausgabevorrichtung 22 für ein Schweißgerät 1 ausgebildet sein kann, wobei diese Bedieneinheit bzw. Ein- und/oder Ausgabevorrichtung im Schweißgerät 1 integriert ist. Die Funktionen bzw. Bedienvorgänge entsprechen dabei dem beschriebenen Ausführungsbeispiel mit dem multifunktionalen Fernregler 27.

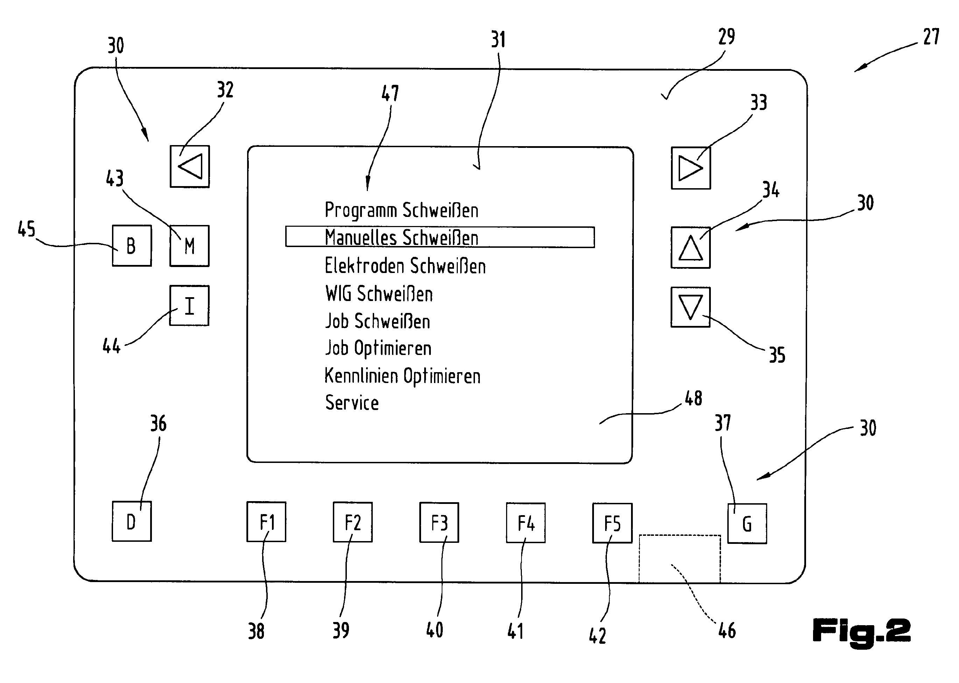

In den Fig. 2 bis 4 ist der multifunktionale Fernregler 27 für ein Schweißgerät 1 bzw. eine Schweißstromquelle 2 detailliert dargestellt, über den ein Benutzer sämtliche Parameter, Funktionen und Betriebsarten einstellen kann.

Im Folgenden sind auf eine Zusammenschau der Fig. 1 - 4 verwiesen. Der multifunktionale Fernregler 27 wird derart gebildet, daß in einem Gehäuse 29 mehrere Einstellelemente bzw. Schaltelemente 30, die in Form von Tastern ausgebildet sind, und ein Anzeigeelement 31, welches durch einen LCD-Schirm gebildet ist, aufweist. Die Schaltelemente 30 werden dabei derartig eingesetzt, daß diesem eine oder mehrere Funktionen zugeordnet sind. Selbstverständlich ist es auch möglich, daß andere bekannte Einstellelemente, wie beispielsweise ein Inkrementalgeber, angeordnet sein können. Dabei weist der Fernregler 27, bevorzugt jeweils eine Taste links/rechts 32, 33 zur horizontalen Navigation, jeweils eine Taste rauf/runter 34, 35 zur vertikalen Navigation, eine Taste Drahteinfädelhilfe 36, eine Taste Gasprüfung 37, mehrere, insbesondere fünf Tasten Softkeys/Speichertasten 38 bis 42 auf. An dem Fernregler 27 sind weitere spezielle Schaltelement 30, insbesondere eine Menütaste 43, eine Infotaste 44 und eine Berechtigungstaste 45, angeordnet.

Zusätzlich weist der multifunktionale Fernregler 27 einen Speicher, insbesondere eine Speicherkarte, nicht dargestellt, auf. Weiters ist zumindest eine Schnittstelle 46, insbesondere einen USB-Anschluß, die schematisch in strichlierten Linien dargestellt ist, am Fernregler 27 angeordnet, wodurch entsprechende Komponenten bzw. Geräte mit einem korrespondierenden Anschluß angeschlossen werden können und somit über den multifunktionalen Fernregler 27 ebenfalls angesteuert werden können. Damit eine Steuerung des Schweißgerätes 1 bzw. der Schweißstromquelle 2 überhaupt möglich ist, wird der multifunktionale Fernregler 27 über zumindest eine Leitung 28 mit dem Schweißgerät 1 bzw. mit der Schweißstromquelle 2 verbunden. Selbstverständlich ist es möglich, daß andere zum Stand der Technik zählende Verbindungsvorrichtungen, wie beispielsweise über Lichtleiter oder Funk, eingesetzt werden können, wobei hierzu die notwendigen Baugruppen im Gehäuse 29 des Fernreglers 27 und dem Schweißgerät 1 angeordnet sind. Bei einem Beispiel für eine Bedieneinheit gleicht dieser dem zuvor beschriebenen Aufbau des Fernreglers 27 mit dem einen Unterschied, daß die Bedieneinheit im Schweißgerät 1 integriert ist, so daß eine Leitungsverbindung entfallen kann bzw. die Bedieneinheit mit der Steuervorrichtung 4 des Schweißgerätes 1 verbunden ist. Da die Funktionalität sowie der Aufbau der Bedieneinheit dem Fernregler 27 gleicht, wird auf eine spezielle Beschreibung für die Bedieneinheit verzichtet.

Bei dem Fernregler 27 bzw. der Bedieneinheit werden die am Fernregler 27 bzw. der Bedieneinheit eingestellten Daten sofort nach Einstellung übertragen, d.h., daß bei Verstellung bzw. Einstellung einer Funktion bzw. eines Parameters die Änderungen ohne explizite Speicherung sofort aktiv sind. Selbstverständlich ist es auch möglich, daß die Daten zuerst im Fernregler 27 bzw. der Bedieneinheit gesammelt bzw. gespeichert werden und anschließend in einem Datenpaket oder mehreren Datenpaketen an das Schweißgerät 1 übergeben werden.

Die Stromversorgung des Fernreglers 27 erfolgt über die Verbindung, insbesondere über die Leitungen 28, vom Schweißgerät 1, wogegen die Bedieneinheit direkt mit dem internen Versorgungsnetz des Schweißgerätes 1 verbunden ist. Dabei ist es auch möglich, daß im Fernregler 27 eine eigene Energiequelle, beispielsweise in Form von Batterien oder Akkus bzw. einem eingebauten Netzwerk, angeordnet ist oder der Fernregler 27 mit einer eigenen Energiequelle, insbesondere einem Netzgerät, angeschlossen werden kann. Durch die unabhängige Versorgung des Fernreglers 27 wird erreicht, daß ein Betrieb des Fernreglers 27 auch ohne Schweißgerät 1 oder einer anderen Komponente möglich ist.

Sämtliche Parameter bzw. Einstellmöglichkeiten des Schweißgerätes 1 bzw. der Schweißstromquelle 2, die bei einem aus dem Stand der Technik bekanntem Schweißgerät 1 über eine am Schweißgerät 1 angeordnete Ein- und/oder Ausgabevorrichtung 22 eingestellt werden können, sowie weitere interne Parameter oder Funktion, sind auch am bzw. über den Fernregler 27 einstellbar bzw. auf diesem vorhanden. Auch die vom Schweißgerät 1 während eines Schweißprozesses aufgenommene Istwerte der einzelnen Parameter können am Fernregler 27 angezeigt und sogar visualisiert, also in Diagrammen, dargestellt werden. Dabei erfolgt die Auswahl der unterschiedlichen Parameter bzw. Einstellmöglichkeiten in Form von Menüpunkten 47, die an der Anzeigevorrichtung 31 bedienerfreundlich in Form von Symbolen und Texten dargestellt sind.

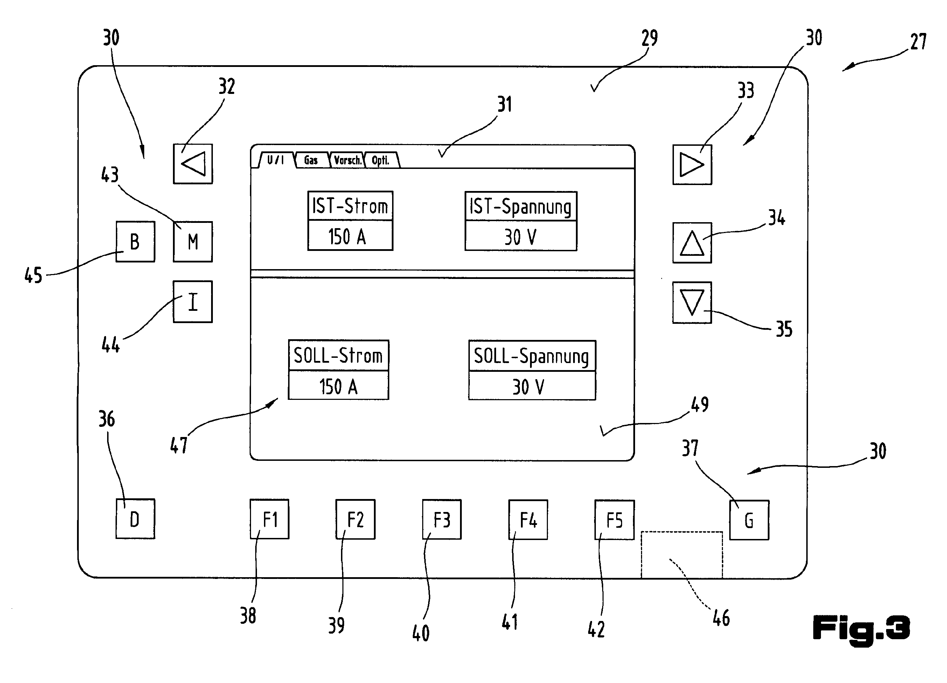

Dabei stehen bei der Aktivierung des Fernreglers 27 einem Benutzer zumindest zwei Ebenen zur Verfügung, insbesondere eine Hauptebene 48 und eine Arbeitsebene 49, wie schematisch in Fig. 2 - Hauptebene 48 - und in Fig. 3 - Arbeitsebene 49 - dargestellt, wobei in jeder Ebene unterschiedliche Menüpunkte 47 vorhanden sind, die über die Einstellelemente ausgewählt werden können. Selbstverständlich ist es möglich, daß der Arbeitsebene 49 noch weitere Unterebenen zugeordnet sein können.

Um eine sehr hohe Bedienerfreundlichkeit zu erreichen, sind in den unterschiedlichsten Ebenen eine oder mehrere Karteikarten angeordnet, in denen die Menüpunkte 47, insbesondere die Parameter, Funktionen und/oder Betriebsarten des Schweißgerätes 1, angezeigt werden und entsprechend ausgewählt bzw. eingestellt werden können, wie dies aus Fig. 3 ersichtlich ist, bei der beispielsweise vier Karteikarten angeordnet sind. Der Benutzer braucht hierzu lediglich eine Karteikarte auszuwählen, wodurch diese in den Vordergrund gestellt wird und die einzelnen Einstellmöglichkeiten sichtbar werden, d.h., daß die Karteikarten bzw. die Menüpunkte in einer endlosen Schleife abgerufen werden oder eine bestimmte Anzahl unterschiedlicher Menüpunkte oder Karteikarten hintereinander abgerufen werden, wobei die Navigation zur Auswahl eines Menüpunktes bzw. einer Karteikarte über Schaltelemente 30, insbesondere über Tasten links/rechts 32, 33 und/oder rauf/runter 34, 35, erfolgt. Dabei wird bevorzugt eine horizontale Anordnung der Karteikarten verwendet, d.h., daß mehrere Karteikarten übereinander angeordnet sind, wobei beispielsweise im oberen Bereich des Anzeigeelementes 31 jede Karteikarte über einen Teilbereich, in dem ein Symbol bzw. ein Text aufscheint, sichtbar ist, so daß der Benutzer eine beliebige Karteikarte auswählen kann, wie dies in Fig. 3 schematisch dargestellt ist. Damit wird erreicht, daß sich der Benutzer sehr einfach orientieren kann, da dieser auf einen Blick sehen kann, in welcher Karteikarte er sich gerade befindet und wie viele es in dieser Ebene überhaupt gibt. Er kann damit auch die unterschiedlichsten Ebene auf einen Blick erkennen.

In der ersten Ebene, insbesondere in der Hauptebene 49, sind die Arbeitstätigkeiten, wie beispielsweise die Menüpunkte 47 "Programm Schweißen", "manuelles Schweißen", "Elektroden Schweißen", "WIG-Schweißen", "Job Schweißen", "Job Optimieren", "Kennlinien Optimieren", "Service", angeordnet, wobei diese Menüpunkte 47 in einer Karteikarte angeordnet sind oder jeweils eine eigene Karteikarte bilden kann. Diese Menüpunkte 47 sind dabei Senkrecht untereinander angeordnet und können über die Tasten rauf/runter 34, 35 angewählt werden können. Zum Aktivieren muß der Benutzer ein entsprechendes Schaltelement 30, insbesondere eine der Tasten Softkey/Speichertaste 38 bis 42, betätigen, wodurch am Anzeigeelement 31 die zweite Ebene - Arbeitsebene 49 - angezeigt wird. In der zweiten Ebene, insbesondere in der Arbeitsebene 49, sind die zugehörigen Parameter, Wertelisten, Funktionen, usw., angeordnet, wobei diese auf mehrere Karteikarten verteilt werden können. Diese sind wiederum durch einzelne Menüpunkte 47, beispielsweise in Form von Symbolen, ausgeführt. Die Auswahl der einzelnen Menüpunkte 47 bzw. Karteikarten wird über die Tasten links/ rechts 32, 33 durchgeführt, wobei bei Auswahl eines Menüpunktes 47 die dazugehörigen Parameter bzw. Einstellmöglichkeiten automatisch am Anzeigeelement 31 eingeblendet werden. Um zu diesen Parametern bzw. Einstellmöglichkeiten zu gelangen, ist es lediglich notwendig, diese mit den Tasten rauf/runter 34, 35 auszuwählen.

Um eine optimale Benutzerführung zu erreichen, wurden die beiden Schaltelemente 30 Menütaste 43 und Infotaste 44 angeordnet. Wird dabei die Menütaste 43 aktiviert, so kann von jeder Ebene bzw. von jedem Menüpunkt 47 in die Ausgangsebene, insbesondere in die erste Ebene - Hauptebene 48 - bzw. zu einer definierten Karteikarte zurück gekehrt werden. Aktiviert man hingegen das Schaltelement 30, insbesondere die Infotaste 44, so wird zu dem gerade ausgewählten Menüpunkt 47 ein Informationstext, der beispielsweise eine Beschreibung des ausgewählten Parameters oder der Funktion enthält, aufgerufen.

Bei der Auswahl des Menüpunktes 47 "Programm Schweißen" sind in der Arbeitsebene 49 unterschiedliche Schweißverfahren für Roboterschweißanlagen hinterlegt, die entsprechend angepaßt werden können. Durch Aufruf dieses Menüpunktes 47 werden beispielsweise am Schweißgerät 1 zusätzliche Komponenten aktiviert, die beispielsweise für einen Datenaustausch mit einem Roboter notwendig sind oder weitere externe Geräte angesteuert werden können.

Im Menüpunkt 47 manuelles Schweißen sind sämtliche Parameter enthalten, wie diese auf einem modernen Schweißgerät 1 vorhanden sind. Durch diesen Menüpunkt 47 kann der Benutzer eigene Schweißprozesse einstellen.

Die Menüpunkte 47 "Elektroden Schweißen" und "WIG Schweißen" entsprechen handelsübliche aus dem Stand der Technik bekannte Verfahren. Der Unterschied zu den aus dem Stand der Technik bekannten Schweißgeräten 1 liegt darin, daß nunmehr sämtliche Einstellmöglichkeiten bzw. Parameter als Menüpunkt 47 übersichtlich ausgeführt sind und nicht mehr durch mechanische Einstellmittel am Schweißgerät 1 eingestellt werden müssen.

Bei dem Menüpunkt 47 Job Schweißen ist es möglich, daß der Benutzer seinen eigenen Schweißprozeß abspeichern kann. Die Menüpunkte 47 "Job Optimieren" und "Kennlinie Optimieren" dienen zur Anpassung bereits hinterlegter oder aufgenommener Kurvenformen.

Über den multifunktionalen Fernregler 27 bzw. über die Bedieneinheit ist es auch möglich, daß für unterschiedliche Benutzer unterschiedliche Profile direkt am Fernregler 27 bzw. an der Bedieneinheit eingestellt werden können, wobei für die Einstellung der Profile der Benutzer in der Hauptebene 48 den Menüpunkt 47 "Service" aufrufen muß, so daß anschließend in der Arbeitsebene 49 die entsprechenden Berechtigungen für die einzelnen Menüpunkte 47 und/oder Karteikarten freigegeben werden können oder bereits fix vordefinierte Profile einen Benutzer zugewiesen werden. Bevorzugt wird die Einstellung der Profile durch ein Paßwort oder einer Kennung abgesichert, um Unbefugten den Zutritt zu verweigern.

Durch die Vergabe von Berechtigungen ist es nunmehr möglich, daß je nach eingestellten Profil der Benutzer nur auf die für dieses Profil freigegebene Menüpunkte 47 zugreifen kann, wobei die weiteren deaktivierten Menüpunkte 47 ausgeblendet werden oder diese inaktiv hinterlegt sind. Dadurch wird eine vereinfachte Bedienung des Fernreglers 27 erreicht, da der Benutzer nur mehr jene Menüpunkte 47 betätigen kann, die für sein Profil freigegeben sind. Damit der multifunktionale Fernregler 27 bzw. die Bedieneinheit das eingestellte Profil des Benutzers aktivieren kann, ist es notwendig, daß bei Aktivierung des Fernreglers 27 oder des Schweißgerätes, also bei der Inbetriebnahme, zuerst die Berechtigungstaste 45 betätigt werden muß, um sich anzumelden.

Durch den Einsatz eines Fernreglers 27 ist es nunmehr möglich, daß am Schweißgerät 1 keine Ein- und/oder Ausgabevorrichtung 22 bzw. Bedieneinheit mehr notwendig ist oder nur die notwendigsten Einstellelemente für die wichtigsten Parameter vorhanden sind, da alle Einstellungen über den Fernregler 27 vorgenommen werden können. Somit kann eine sehr kostengünstiges Schweißgerät 1 realisiert werden, wobei einfache Schweißprozesse auch ohne den Fernregler 27 eingestellt und durchgeführt werden können.

Es ist auch möglich, daß der Fernregler 27 während des Betriebes des Schweißgerätes 1 bzw. der Schweißstromquelle von diesem abgeschlossen und an ein weiteres im Betrieb befindlichen Schweißgerätes 1 bzw. einer im Betrieb befindlichen Schweißstromquelle 2 angeschlossen wird, wobei immer die Letzteinstellungen am Fernregler 27 gespeichert bleiben und somit diese in einfacher Form übertragen werden können. Durch ein derartiges Vorgehen können somit mehrere Schweißgeräte 1 mit dem selben Fernregler 27 eingestellt werden, wobei die Einstellungen nur ein einziges Mal durchgeführt werden müssen.

Durch die graphische Darstellung der Einstellmöglichkeiten ist es sehr einfach möglich, daß die Menüpunkte 47 bzw. die Informationsstruktur am Fernregler 27 bzw. an der Bedieneinheit jederzeit erweiterbar ist. Somit ist in einfacher Form eine Anpassung des Fernreglers 27 bzw. der Bedieneinheit auf kundenspezifische Wünsche bzw. Ausbildungen durch entsprechende Programmierung leicht möglich. Es besteht auch die Möglichkeit, daß der Benutzer sich eine eigene Oberfläche aus den verschiedensten Karteikarten bzw. Menüpunkten 47 zusammenzustellen. Dies kann beispielsweise derart erfolgen, daß der Benutzer einen Parameter, eine Funktion oder eine Betriebsart auswählt und anschließend ein Schaltelemente 30, insbesondere eine der Tasten Softkey/Speichertaste 38 bis 42, betätigt, so daß der ausgewählte Parameter oder die ausgewählte Funktion oder Betriebsart auf eine Benutzerseite, also Karteikarte, kopiert wird. So kann der Benutzer auf eine für ihn bestimmte Seite oder Karteikarte sämtliche unterschiedliche Einstellmöglichkeiten, die er am meisten braucht, ablegen.

Grundsätzlich sei noch erwähnt, daß die Datenübertragung vom Fernregler 27 zum Schweißgerät 1 bzw. von der Bedieneinheit zu Steuervorrichtung 4 und umgekehrt, bevorzugt seriell, über einen Feldbus erfolgt. Weiters ist es möglich, daß für die Benutzererkennung unterschiedliche Erkennungssysteme, wie beispielsweise ein Transpondersystem, ein Chipkartensystem, Fingerabdrucksensoren usw., eingesetzt werden können.

Es ist auch möglich, daß der Fernregler 27 bzw. das Schweißgerät 1 mit der Bedieneinheit mit einem Computer oder Laptop verbunden werden kann, wodurch zuerst die Einstellungen am Computer oder Laptop durchgeführt werden können und diese Einstellungen über den Computer oder Laptop in den Fernregler 27 bzw. in das Schweißgerät 1 eingespielt werden können. Bei der Verwendung des Fernreglers 27 werden durch Verbinden des Fernreglers 27 mit dem Schweißgerät 1 diese Einstellungen am Schweißgerät 1 übertragen bzw. wirksam. Damit ist es nicht mehr notwendig, daß der Computer bzw. Laptop am Schweißgerät 1 angeschlossen werden muß, sondern die Programmierung bzw. Einstellung spezieller Schweißprozesse am Computer oder Laptop erstellt werden und diese anschließend über den leicht tragbaren Fernregler 27 eingespielt werden können.

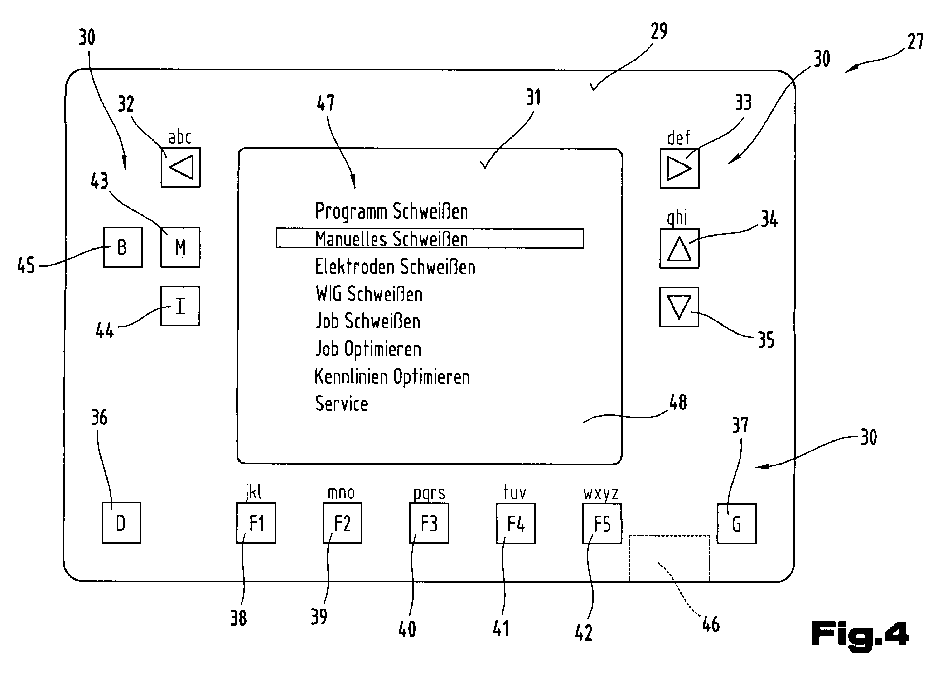

Weiters besteht die Möglichkeit, daß auch Textfelder angeordnet bzw. eingesetzt werden können. Hierzu sind den einzelnen Schaltelementen 30 entsprechende Buchstaben zugeordnet, so daß der Benutzer durch mehrmaliges Betätigen dieser Schaltelemente 30 die unterschiedlichsten Buchstaben auswählen kann. Die Erkennung, daß die Schaltelemente 30 von ihrer Grundfunktion auf den Buchstabenmodus umgeschaltet werden müssen, erfolgt dabei automatisch. Der Benutzer muß hierzu lediglich ein entsprechendes Textfeld auswählen, wodurch vom Fernregler 27, insbesondere einer darin angeordneten Steuervorrichtung, die Schaltelemente 30 in den Buchstabenmodus umschaltet und somit ein freier Text eingegeben werden kann. Damit kann in einfacher Form beispielsweise eine Paßwortabfrage realisiert werden oder es können unterschiedliche Einstellungen mit einem Text bzw. Kommentar versehen werden. Ein derartiges Beispiel ist in Fig. 4 dargestellt. Dadurch wird auch eine übersichtliche Verwaltung der gespeicherten Einstellungen bzw. der aufgenommenen Schweißprozesse möglich, da der Benutzer diese entsprechend Kennzeichnen bzw. Beschreiben kann. Selbstverständlich ist es auch möglich, daß eigene Schaltelemente 30, nicht dargestellt, für die Texteingabe angeordnet sein können oder ein Zusatzgerät, wie beispielsweise eine Tastatur, angeschlossen werden kann.

Weiters ist es möglich, daß beim Anschließen des Fernreglers 27 an das Schweißgerät 1 zuerst ein Abgleich erfolgt, so daß vom Fernregler 27 eine Anpassung der möglichen Funktionen, insbesondere der Menüpunkte 47, für das Schweißgerät 1 durchgeführt werden kann, d.h., daß durch das Anschließen ein Datenaustausch durchgeführt wird, wobei vom Schweißgerät 1 dem Fernregler 27 eine entsprechende Kennung übergeben wird und somit eine entsprechende Strukturanpassung, also eine Anpassung der möglichen Menüpunkte 47, der Karteikarten und/oder der Graphik, vorgenommen werden kann. Durch diesen Abgleich ist es möglich, daß ein Fernregler 27 bzw. eine Bedieneinheit für die unterschiedlichsten Typen von Schweißgeräten 1 verwendet werden kann, wobei am Fernregler 27 bzw. an der Bedieneinheit immer nur jene Menüpunkte 47 und/oder Karteikarten angezeigt werden, die bei diesem Schweißgerät 1 eingestellt werden können, d.h., daß vom Fernregler 27 bzw. vom Schweißgerät 1 mit der Bedieneinheit, je nach angeschlossenen Schweißgerätetyp bzw. Schweißstromquellentyp, eine entsprechende Anpassung der Oberfläche, der Karteikarten bzw. der Menüpunkte 47 durchgeführt wird.

Selbstverständlich ist es auch möglich, daß der multifunktionale Fernregler 27 bzw. die Bedieneinheit derart ausgebildet werden kann, daß anstelle des Hauptmenüs bzw. der Hauptebene 48 Schaltelemente, nicht dargestellt, insbesondere Fixtasten, angeordnet sind und somit durch Betätigen eines dieser Schaltelemente - Fixtasten - direkt in die Arbeitsebene 49 eingestiegen werden kann, d.h., daß sämtliche bzw. einige im Hauptmenü bzw. in der Hauptebene 48 angeordnete Menüpunkte 47 am Schweißgerät 1 bzw. am Fernregler 27 oder der Bedieneinheit durch die Fixtasten ausgeführt sind, bzw. diesen zugeordnet werden. Somit kann die Hauptebene 48 entfallen und der Benutzer kann direkt durch Betätigen einer Fixtaste in die Arbeitsebene 49 einsteigen und wiederum sämtliche Einstellungen vornehmen.

Bei den zuvor beschriebenen Beispielen ist eine unterschiedliche Navigation in den verschiedensten Ebenen beschreiben bzw. dargestellt. Dabei erfolgt in der ersten Ebene eine horizontale Navigation, wogegen in der zweiten Ebene bzw. in jeder weiteren Ebene die Navigation zwischen den Karteikarten horizontal erfolgt. Selbstverständlich ist auch eine umgekehrte Navigation möglich. Wird hingegen nur eine Ebene eingesetzt, in der mehrere Karteikarten angeordnet sind, so wird bevorzugt eine horizontale Navigation eingesetzt.

Weiters ist es bei den zuvor beschriebenen Beispielen möglich, daß bei Auswahl einer Karteikarte bzw. eines Menüpunktes den Schaltelementen 30 Taste Softkey/Speichertaste 38 bis 42 bestimmte Funktionen, wie beispielsweise Speichern, Übernehmen, Weiterleiten, Bestätigen usw., zugeordnet werden, so daß durch Betätigen der entsprechenden Taste(n) 38 bis 42 diese Funktion aufgerufen werden kann. Damit wird ein sehr flexibles System geschaffen, da immer nur jene Funktionen angezeigt bzw. aufgerufen werden, die für diese Karteikarte möglich sind.

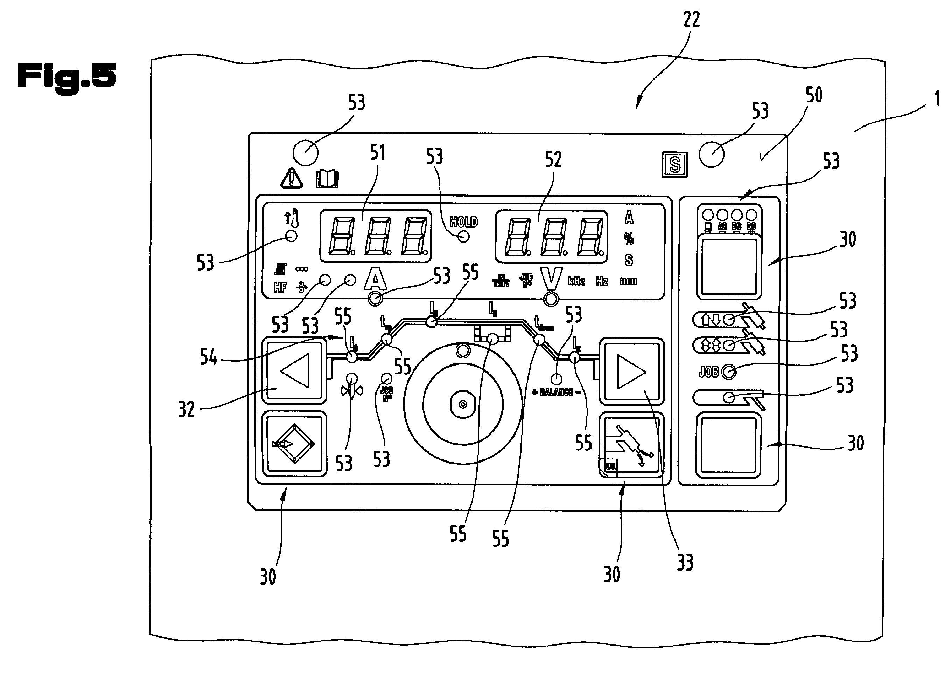

In Fig. 5 ist ein Ausführungsbeispiel der Erfindung zur Bedienung eines Schweißgerätes 1 gezeigt, wobei die Bedienung des Schweißgerätes direkt am Schweißgerät 1 erfolgt und nicht über den Fernregler 27 oder eine entsprechend integrierte Bedieneinheit, wie bei den zuvor angeführten Ausführungsbeispielen beschrieben, durchgeführt wird.

Bei dem gezeigten Schweißgerät 1 wird nunmehr eine übliche Ein- und/oder Ausgabeeinheit 22 eingesetzt, wobei diese aus einer Frontplatte 50, an der die Einstellorgane bzw. Schaltelemente 30 für die unterschiedlichsten Parameter bzw. Menüpunkte angeordnet sind, gebildet. Weiters ist in der Frontplatte 50 zumindest eine, bevorzugt jedoch zwei, 7segment-Anzeigen 51, 52 integriert, über die die Werte, insbesondere die Ist-Werte bzw. die Soll-Werte, der einzelnen Parameter bzw. Menüpunkte angezeigt werden. Bei dem dargestellten Ausführungsbeispielen werden die verschiedensten Funktionen bzw. Einstellmöglichkeiten in Form von Symbolen bzw. Texten an der Frontplatte 50 dargestellt, wobei diesen bzw. mehreren zusammengehörigen Einstellmöglichkeiten ein Anzeigeelement, insbesondere eine Leuchtdiode 53, zugeordnet wird, so daß durch Auswahl bzw. Selektion des Parameters die entsprechende Leuchtdiode 53 aktiviert wird.

Der wesentliche Unterschied dieses Ausführungsbeispiels zu den in Fig. 1 bis 4 beschrieben Beispielen liegt darin, daß bei diesem die Einstellmöglichkeiten, insbesondere einige Parameter bzw. Menüpunkte, einzeln auf der Frontplatte ausgeführt sind, wogegen bei den zuvor beschreiben Ausführungsbeispielen die Einstellmöglichkeiten an der Anzeigevorrichtung dargestellt werden, wodurch bei Änderung einer Ebene bzw. bei Auswahl einer Karteikarte die Anzeige an der Anzeigevorrichtung verändert wird.

Weiters ist an der Frontplatte 53 bei dem gezeigten Ausführungsbeispiel ein Funktionsablauf in Form einer Funktionskurve 54 dargestellt, wobei zu diesem Funktionsablauf mehrere Einstellmöglichkeiten, insbesondere Parameter bzw. Menüpunkte, eingestellt werden können. Diese einstellbaren Parameter bzw. Menüpunkte sind beispielsweise an den verschiedensten einstellbaren Stellen der Funktionskurve 54 mit weiteren Leuchtdioden 55 dargestellt, so daß gemäß der Erfindung durch entsprechende Auswahl die Ist- und/oder Soll-Werte an der 7segment-Anzeigen 51, 52 angezeigt werden.

Um eine bedienerfreundliche Oberfläche zu schaffen, ist es auch bei derartigen Ein- und/oder Ausgabevorrichtungen 22 möglich, die erfindungsgemäße Lösung einzusetzen, d.h., daß bei derartigen Funktionsabläufen bzw. Funktionskurven 54 eine horizontale Navigation realisiert werden kann. Selbstverständlich ist es auch möglich, daß bei entsprechender Anordnung eines Funktionsablaufes auch eine vertikale Navigation durchgeführt werden kann. Eine horizontale Navigation zu der Funktionskurve 54 wird beispielsweise derart gebildet, daß für die Auswahl bzw. die Ansteuerung der Parameter bzw. Menüpunkte in der Funktionskurve 54 entsprechende Einstellorgane, insbesondere die Tasten links/rechts 32, 33, angeordnet bzw. eingesetzt werden. Durch Betätigen eines dieser Tasten links/rechts 32, 33 kann nunmehr von einem Parameter bzw. Menüpunkt auf den nächsten Parameter bzw. Menüpunkt umgeschaltet werden, wobei immer jene Leuchtdiode 55 aktiviert wird, welcher Parameter bzw. Menüpunkt gerade ausgewählt wurde, d.h., daß die Menüpunkte bzw. die Parameter in einer endlosen Schleife abgerufen werden oder eine bestimmte Anzahl unterschiedlicher Menüpunkte bzw. Parameter hintereinander abgerufen werden, wobei die Navigation zur Auswahl eines Menüpunktes bzw. eines Parameters über Schaltelemente 30, insbesondere über Tasten links/ rechts 32, 33 , erfolgt. Durch die Taster links/rechts 32, 33 kann nunmehr der Benutzer eine horizontale Navigation in beiden Richtungen durchführen.

Selbstverständlich ist es auch möglich, daß dieser Funktionsablauf bzw. die Funktionskurve 54 in einer Karteikarte, gemäß den Ausführungen der Fig. 1 bis 4, integriert bzw. angezeigt wird und somit auch eine Bedienung eines derartigen Schweißgerätes 1 über den Fernregler 27 bzw. der Bedieneinheit gemäß den Fig. 1 bis 4 möglich ist. Weiters ist es auch möglich, daß bei dieser Art der Bedienung auch eine Kombination fix ausgeführter Parameter bzw. Menüpunkte mit einem Anzeigeelement 31 (siehe Fig. 2 bis 4), insbesondere einer LCD-Anzeige, durchgeführt werden kann, wodurch es beispielsweise möglich ist, mehrere derartige Funktionsabläufe bzw. Funktionskurven 54 aufzurufen, die an der LCD-Anzeige angezeigt werden, d.h., daß beispielsweise der Bereich der Funktionskurve 54 durch eine LCD-Anzeige gebildet wird und der restliche Aufbau der Ein- und/oder Ausgabevorrichtung 22 durch fix ausgeführte Parameter bzw. Menüpunkte ausgeführt wird. Diese Ausbildung hat den Vorteil, daß dadurch eine wesentlich kleinere und somit kostengünstigere LCD-Anzeige eingesetzt werden kann, wobei jedoch eine sehr hohe Flexibilität erreicht wird, da eine Vielzahl verschiedenster Funktionskurven 54 dargestellt werden kann. Es ist natürlich auch möglich, an dieser LCD-Anzeige auch andere Einstellmöglichkeiten aufzurufen, so daß noch weitere nicht ausgeführte Parameter bzw. Menüpunkte eingestellt werden können.

Weiters ist es möglich, daß zu den zuvor beschriebenen Beispielen der Fig. 1 bis 5 eine Eingabesperre bzw. Tastensperre integriert ist, d.h., daß bei Aktivierung der Eingabesperre bzw. der Tastensperre keine Eingabe bzw. Verstellung am Fernregler 27 bzw. der Bedieneinheit oder der Ein- und/oder Ausgabevorrichtung 22 mehr möglich ist. Dies ist erst dann wieder möglich, wenn der Benutzer bewußt die Tastensperre aufhebt. Dadurch wird erreicht, daß eine unbewußte Verstellung nicht mehr möglich ist. Die Tastensperre kann dabei derart realisiert werden, daß durch Betätigen einer bestimmten Tastenkombination mehrerer Schaltelemente 30 oder durch Betätigen eines bestimmten Schaltelementes 30 eine Deaktivierung sämtlicher oder bestimmter Schaltelemente 30 bzw. Einstellorgane erfolgt und somit eine Bedienung über den Fernregler 27 oder die Bedieneinheit bzw. die Ein- und/oder Ausgabevorrichtung 22 unterbunden und/oder eingeschränkt wird.

Es ist auch möglich, daß diese Eingabesperre bzw. diese Tastensperre automatisch eingeleitet wird. Dies kann derartig erfolgen, daß nach Ablauf einer voreingestellten Zeit, in der keine Eingabe erfolgt, die Eingabesperre bzw. Tastensperre aktiviert wird und somit eine unbewußte Verstellung nicht mehr möglich ist, da der Benutzer zuerst die Tastensperre bewußt aufheben muß.

Weiters ist es möglich, daß das Anzeigeelement 31 durch einen Touch-Screen realisiert wird, so daß durch leichtes Aufdrücken auf die Anzeigevorrichtung 31 ein Menüpunkt oder eine Karteikarte oder Funktionen und Parameter ausgewählt werden können. Durch den Einsatz eines derartigen Touch-Screen können mehrere bzw. alle Schaltelemente 30 eingespart werden, wobei die Navigation einfach durch Drücken auf den Schirm erfolgt. Dabei ist es auch möglich, daß am Schirm eine bzw. alle Schaltelemente symbolhaft dargestellt werden.

Abschließend sei darauf hingewiesen, daß in den zuvor beschriebenen Ausführungsbeispiel einzelne Zustände bzw. Darstellungen unproportional dargestellt wurden, um das Verständnis der erfindungsgemäßen Lösung zu verbessern.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Versorgungsleitung
- 19: Kühlkreislauf
- 20: Strömungswächter

- 21: Wasserbehälter
- 22: Ein- und/oder Ausgabevorrichtung
- 23: Schlauchpaket
- 24: Verbindungseinrichtung
- 25: Zugentlastungsvorrichtung

- 26: Gehäuse
- 27: Fernregler
- 28: Leitung
- 29: Gehäuse
- 30: Schaltelement

- 31: Anzeigeelement
- 32: Taste links
- 33: Taste rechts
- 34: Taste rauf
- 35: Taste runter

- 36: Taste Drahteinfädelhilfe
- 37: Taste Gasprüfung
- 38: Taste Softkey / Speichertaste
- 39: Taste Softkey / Speichertaste
- 40: Taste Softkey / Speichertaste

- 41: Taste Softkey / Speichertaste
- 42: Taste Softkey / Speichertaste
- 43: Menütaste
- 44: Infotaste
- 45: Berechtigungstaste

- 46: Schnittstelle
- 47: Menüpunkt
- 48: Hauptebene
- 49: Arbeitsebene
- 50: Frontplatte

- 51: 7segment-Anzeige
- 52: 7segment-Anzeige
- 53: Leuchtdiode
- 54: Funktionskurve
- 55: Leuchtdiode

## Patentansprüche

1. Schweißgerät (1) mit einer integrierten Bedieneinheit, welche Einstellelemente bzw. Schaltelemente (30) und zumindest ein Anzeigeelement (31, 51, 52) aufweist, wobei im Schweißgerät (1) Speicher für die Abspeicherung von Daten sowie Schnittstellen (46) angeordnet sind und wobei die Einstellung bzw. Verstellung der verschiedensten Parameter, Funktionen und/oder Betriebsarten menügeführt ist,
**dadurch gekennzeichnet**,
- dass ein Funktionsablauf, der mehrere Einstellmöglichkeiten, insbesondere Parameter bzw. Menüpunkte (47), umfasst, in Form einer Funktionskurve (54) ausgeführt ist,
- dass für die Auswahl bzw. die Ansteuerung der Parameter bzw. Menüpunkte (47) in der Funktionskurve (54) entsprechende Einstellorgane, insbesondere die Tasten links/rechts (32, 33), angeordnet bzw. eingesetzt werden und
- dass im Verlauf der Funktionskurve (54) Anzeigeelemente (55) angeordnet sind, so dass, durch entsprechende Auswahl die Ist- oder Soll-Werte an dem zumindest einen Anzeigeelement (31, 51, 52) angezeigt werden.

2. Schweißgerät (1) nach Anspruch 1, **dadurch gekennzeichnet, daß** das Anzeigeelement (31) durch einen LCD-Schirm, insbesondere durch einen grafikfähigen LCD-Schirm, gebildet ist.

3. Schweißgerät (1) nach einem der vorhergehenden Ansprüche, **dadurch gekennzeichnet, daß** sämtliche Parameter bzw. Einstellmöglichkeiten des Schweißgerätes (1) an der Bedieneinheit einstellbar sind bzw. verfügbar sind.

4. Schweißgerät (1) nach einem der vorhergehenden Ansprüche, **dadurch gekennzeichnet, daß** die Auswahl der unterschiedlichen Parameter bzw. Einstellmöglichkeiten in Form von Menüpunkten (47) an der Anzeigevorrichtung (22) dargestellt sind.

5. Schweißgerät (1) nach einem der vorhergehenden Ansprüche, **dadurch gekennzeichnet, daß** bei der Aktivierung des Schweißgerätes (1) mit der Bedieneinheit dem Benutzer zumindest eine, bevorzugt jedoch zwei, Ebenen, insbesondere eine Hauptebene (48) und eine Arbeitsebene (49), zur Verfügung stehen, wobei unterschiedliche Karteikarten bzw. Menüpunkte (47) vorhanden sind, die über ein Einstellelement bzw. Schaltelement (30) auswählbar sind.

6. Schweißgerät (1) nach einem der vorhergehenden Ansprüche, **dadurch gekennzeichnet, daß** der Arbeitsebene (49) weitere Unterebenen zugeordnet sind.

7. Schweißgerät (1) nach einem der vorhergehenden Ansprüche, **dadurch gekennzeichnet, daß** in der ersten Ebenen, insbesondere in der Hauptebene (48), die einzelnen Arbeitstätigkeiten, wie beispielsweise Programmschweißen, manuelles Schweißen, Elektroden Schweißen, WIG Schweißen, Job Schweißen, Job Optimieren, Kennlinien Optimieren, Service, angeordnet sind.

8. Schweißgerät (1) nach einem der vorhergehenden Ansprüche, **dadurch gekennzeichnet, daß** in der zweiten Ebene, insbesondere in der Arbeitsebene (49), die zugehörigen Parameter, Wertelisten, Funktionen angeordnet sind.

9. Schweißgerät (1) nach einem der vorhergehenden Ansprüche, **dadurch gekennzeichnet, daß** die Bedieneinheit mehrere Schaltelemente (30), insbesondere jeweils eine Taste links/rechts (32, 33) zur horizontalen Navigation, jeweils eine Taste rauf/runter (34, 35) zur vertikalen Navigation, eine Taste Drahteinfädelhilfe (36), eine Taste Gasprüfung (37), mehrere insbesondere fünf Tasten Softkeys/Speichertasten (38 bis 42), aufweist.

10. Schweißgerät (1) nach einem der vorhergehenden Ansprüche, **dadurch gekennzeichnet, daß** an der Bedieneinheit ein spezielles Schaltelement (30), insbesondere eine Menütaste (43), angeordnet ist, wobei bei Aktivierung des Schaltelementes (30) von jeder Ebenen bzw. von jedem Menüpunkt (47) bzw. Karteikarte in die erste Ebene, insbesondere in die Hauptebene (48) bzw. in eine definierte Ebene bzw. Karteikarte, zurück gekehrt werden kann.

11. Schweißgerät (1) nach einem der vorhergehenden Ansprüche, **dadurch gekennzeichnet, daß** an der Bedieneinheit ein weiteres spezielles Schaltelement (30), insbesondere eine Infotaste (44), angeordnet ist, mit dem zu jedem Menüpunkt (47) bzw. Karteikarte ein Informationstext aufrufbar ist.

12. Schweißgerät (1) nach einem der vorhergehenden Ansprüche, **dadurch gekennzeichnet, daß** mit dem weiteren Schaltelement (30), insbesondere der Infotaste (44), zusätzliche Parameter oder Istwerte aufrufbar sind.

13. Schweißgerät (1) nach einem der vorhergehenden Ansprüche, **dadurch gekennzeichnet, daß** an der Bedieneinheit ein weiteres Schaltelement (30), insbesondere eine Berechtigungstaste (45), angeordnet ist.

14. Schweißgerät (1) nach einem der vorhergehenden Ansprüche, **dadurch gekennzeichnet, daß** für unterschiedliche Benutzer unterschiedliche Profile einstellbar sind.

15. Schweißgerät (1) nach einem der vorhergehenden Ansprüche, **dadurch gekennzeichnet, daß** je nach eingestelltem Profil der Benutzer nur auf die für dieses Profil freigegebenen Menüpunkte (47) bzw. Karteikarten zugreifen kann, wobei die weiteren deaktivierten Menüpunkte (47) bzw. Karteikarten ausgeblendet werden oder diese inaktiv hinterlegt sind.

16. Schweißgerät (1) nach einem der vorhergehenden Ansprüche, **dadurch gekennzeichnet, daß** die Menüpunkte (47), Karteikarten bzw. die Informationsstruktur jederzeit erweiterbar ist, und somit auf kundenspezifische Ausbildungen oder Wünschen anpaßbar ist.

17. Schweißgerät (1) nach einem der vorhergehenden Ansprüche, **dadurch gekennzeichnet, daß** bei Verstellung bzw. Einstellung einer Funktion bzw. eines Parameters die Änderung ohne expliziete Speicherung sofort aktiv sind.

18. Verfahren zum Einstellen eines Schweißgerätes (1) gemäß den vorhergehenden Ansprüchen 1 bis 17, bei dem über die Bedieneinheit unterschiedliche Parameter, Funktionen und/oder Betriebsarten für das Schweißgerät (1) eingestellt werden, und für die verschiedensten Benutzer unterschiedliche Berechtigungen vergeben werden, **dadurch gekennzeichnet, daß** die Einstellung und Vergabe der Berechtigung bzw. der Profile über der Bedieneinheit erfolgt, und daß der Benutzer je nach eingestelltem Profil oder Berechtigung nur auf die für dieses Profil freigegebenen Menüpunkte (47) bzw. Daten zugreifen kann und die weiteren deaktivierten Menüpunkte (47) ausgeblendet oder inaktiv hinterlegt werden.

19. Verfahren zum Einstellen eines Schweißgerätes (1) gemäß den vorhergehenden Ansprüchen 1 bis 17, bei dem über die Bedieneinheit unterschiedliche Parameter, Funktionen und/ oder Betriebsarten für das Schweißgerät (1) eingestellt werden, **dadurch gekennzeichnet, daß** sämtliche Parameter bzw. Einstellmöglichkeiten des Schweißgerätes (1) bzw. der Schweißstromquelle (2) über die Bedieneinheit eingestellt werden, wobei die Auswahl der unterschiedlichen Parameter, Funktionen und/oder Betriebsarten in zumindest einer Ebene, bevorzugt jedoch zwei Ebenen, insbesondere in einer Hauptebene (48) und einer Arbeitsebene (49), erfolgt und diese in Form von Menüpunkten (47) und/oder Karteikarten an der Anzeigevorrichtung dargestellt werden.

20. Verfahren zum Einstellen eines Schweißgerätes (1) gemäß den vorhergehenden Ansprüchen 1 bis 17, bei dem über die Bedieneinheit unterschiedliche Parameter, Funktionen und/oder Betriebsarten für das Schweißgerät (1), insbesondere für einen Schweißprozeß, eingestellt werden, **dadurch gekennzeichnet, daß** bei der Bedieneinheit durch Betätigen eines speziellen Schaltelementes (30), insbesondere einer Hilfetaste bzw. einer Infotaste (44), zu einem ausgewählten Menüpunkt (47) bzw. der ausgewählten Karteikarte ein Informationstext oder zusätzliche Parameter oder Istwerte aufgerufen und angezeigt werden.

21. Verfahren nach Anspruch 18, 19 oder 20, **dadurch gekennzeichnet, daß** bei einer Verstellung oder Einstellung ohne expliziete Speicherung die Änderungen an das Schweißgerät (1) übertragen werden.

22. Verfahren nach einem der Ansprüche 18 bis 21, **dadurch gekennzeichnet, daß** bei Betätigung der Schaltelemente (30) unterschiedliche Funktionen bzw. Abläufe durchgeführt werden, wobei zumindest eine Taste links/rechts (32, 33) zur horizontalen Navigation und jeweils eine Taste rauf/runter (34, 35) zur vertikalen Navigation, eingesetzt werden.

23. Verfahren nach einem der Ansprüche 18 bis 22, **dadurch gekennzeichnet, daß** bei Aktivierung des Schaltelementes (30), insbesondere der Menütaste (43), von jeder Ebene bzw. von jedem Menüpunkt (47) bzw. Karteikarte in die erste Ebene, insbesondere in die Hauptebene (48) bzw. in eine definierte Ebene bzw. Karteikarte, zurückgekehrt wird.

24. Verfahren nach einem der Ansprüche 18 bis 23, **dadurch gekennzeichnet, daß** in der ersten Ebene eine vertikale Navigation erfolgt, wogegen in der zweiten Ebene bzw. in jeder weiteren Ebene die Navigation zwischen den einzelnen Karteikarten horizontal erfolgt.

25. Verfahren nach einem der Ansprüche 18 bis 24, **dadurch gekennzeichnet, daß** bei Auswahl eines Menüpunktes (47) bzw. einer Karteikarte den Schaltelementen (30), insbesondere der Taste Softkey/Speichertaste (38 bis 42), bestimmte Funktionen zugeordnet werden. werden.

26. Verfahren zum Einstellen eines Schweißgerätes (1) mit einer Bedieneinheit, bei dem über die Bedieneinheit unterschiedliche Parameter, Funktionen und/oder Betriebsarten für das Schweißgerät (1), insbesondere für einen Schweißprozeß, eingestellt und durch zumindest ein Anzeigeelement (31, 51, 52) angezeigt werden, **dadurch gekennzeichnet**,
- daß die Menüpunkte (47) bzw. die Karteikarten in einer endlosen Schleife abgerufen werden oder eine bestimmte Anzahl unterschiedlicher Menüpunkte (47) oder Karteikarten hintereinander abgerufen werden, wobei die Navigation zur Auswahl eines Menüpunktes (47) bzw. einer Karteikarte über Schaltelemente (30), insbesondere über Tasten links/rechts (32, 33) und/oder Tasten rauf/runter (34, 35), erfolgt und
- daß ein Funktionsablauf, der mehrere Einstellmöglichkeiten, insbesondere Parameter bzw. Menüpunkte (47), umfasst, in Form einer Funktionskurve (54) dargestellt wird, so dass durch entsprechende Auswahl die Ist- oder Soll-Werte an dem zumindest einen Anzeigeelement (31, 51, 52) angezeigt werden.

27. Verfahren nach Anspruch 26, **dadurch gekennzeichnet, daß** die Menüpunkte (47), insbesondere spezielle Parameter, auf einen Display bzw. einer Frontplatte (50) des Schweißgerätes (1) oder an einer Anzeigevorrichtung einer Bedieneinheit dargestellt werden.

28. Verfahren nach Anspruch 26 oder 27, **dadurch gekennzeichnet, daß** an der Frontplatte (50) ein Funktionsablauf, insbesondere eine Funktionskurve (54), dargestellt wird, zu der mehrere Parameter bzw. Menüpunkte (47) eingestellt werden, wobei eine horizontale Navigation zu der Funktionskurve (54) derart gebildet wird, daß für die Auswahl bzw. die Ansteuerung der Parameter bzw. Menüpunkte (47) in der Funktionskurve (54) entsprechende Einstellorgane, insbesondere die Tasten links/rechts (32, 33) angeordnet bzw. eingesetzt werden.

29. Verfahren nach einem der vorhergehenden Ansprüche 26 bis 28, **dadurch gekennzeichnet, daß** der Bereich der Funktionskurve (54) durch eine LCD-Anzeige gebildet wird und der restliche Aufbau einer Ein- und/oder Ausgabevorrichtung (22) durch fix ausgeführte Parameter bzw. Menüpunkte ausgeführt wird.

## Claims

1. Welding apparatus (1) with an integrated operating unit having setting elements or switching elements (30) and at least one display unit (31, 51, 52), and a memory for storing data as well as interfaces (46) are arranged in the welding apparatus (1), and the various parameters, functions and/or operating modes are set or edited by a menu-driven system,
**characterized in**
- that a function sequence, comprising several setting options, in particular parameters or menu items (47), is presented in the form of a function curve (54),
- that corresponding setting elements, in particular the left/right buttons (32, 33), are provided or used in order to select or activate the parameters or menu items (47) in the function curve (54) and
- that display units (55) are arranged in the course of the function curve (54) so that corresponding selection enables the actual values or desired values to be displayed at the at least one display element (31, 51, 52).

2. Welding apparatus (1) according to claim 1, **characterized in that** the display unit (31) is an LCD screen, in particular an LCD screen with graphics capability.

3. Welding apparatus (1) according to one of the preceding claims, **characterized in that** all parameters or setting options for the welding apparatus (1) can be set from and are available at the operating unit.

4. Welding apparatus (1) according to one of the preceding claims, **characterized in that** the selection of different parameters and settings options is presented on the display system (22) in the form of menu items (47).

5. Welding apparatus (1) according to one of the preceding claims, **characterized in that** when the welding apparatus (1) is activated, at least one, but preferably two levels are made available to the user by the operating unit, in particular a main level (48) and a working level (49), in which different tabs and menu items (47) are available and can be selected by means of the setting elements and switching element (30).

6. Welding apparatus (1) according to one of the preceding claims, **characterized in that** additional sub-levels are assigned to the working level (49).

7. Welding apparatus (1) according to one of the preceding claims, **characterized in that** the individual work activities, such as program welding, manual welding, electrode welding, WIG welding, job welding, job optimization, characteristic curve optimization, service, are disposed in the first levels, in particular in the main level (48).

8. Welding apparatus (1) according to one of the preceding claims, **characterized in that** the associated parameters, lists of values and functions are disposed in the second level, in particular in the working level (49).

9. Welding apparatus (1) according to one of the preceding claims, **characterized in that** the operating unit has several switching elements (30), in particular respective left/right buttons (32, 33) for horizontal navigation, respective up/down buttons (34, 35) for vertical navigation, a wire inserting aid button (36), a gas check button (37), several, in particular five, soft key/memory key buttons (38 to 42).

10. Welding apparatus (1) according to one of the preceding claims, **characterized in that** a special switching element (30), in particular a menu button (43), is provided on the operating unit, which enables the system to be switched from each of the levels or from every menu item (47) or tab back to the first level, in particular the main level (48) and to a defined level or a defined tab, when the switching element (30) is activated.

11. Welding apparatus (1) according to one of the preceding claims, **characterized in that** another special switching element (30) is provided on the operating unit, in particular an information button (44), by means of which textual information about every menu item (47) and tab can be retrieved.

12. Welding apparatus (1) according to one of the preceding claims, **characterized in that** additional parameters or actual values can be retrieved with the other switching element (30), in particular the information button (44).

13. Welding apparatus (1) according to one of the preceding claims, **characterized in that** another switching element (30), in particular an authorization button (45), is provided on the operating unit.

14. Welding apparatus (1) according to one of the preceding claims, **characterized in that** different profiles can be set up for different users.

15. Welding apparatus (1) according to one of the preceding claims, **characterized in that** depending on the profile set up, the user can access only those menu items (47) or tabs authorized by this profile and the other disabled menu items (47) or tabs are not displayed or are shown as disabled.

16. Welding apparatus (1) according to one of the preceding claims, **characterized in that** the menu items (47), tabs or information structure can be extended at any time and thus adapted to customer-defined configurations or requirements.

17. Welding apparatus (1) according to one of the preceding claims, **characterized in that** when a function or a parameter is set or edited, it immediately becomes active without explicitly having to save it.

18. Method of setting up a welding apparatus (1) according to one of the preceding claims 1 to 17, where various parameters, functions and/or operating modes of the welding apparatus (1) are set via the operating unit, and different authorizations are allocated to the different users, **characterized in that** the authorizations or profiles are set up and allocated via the operating unit, and depending on the profile or authorization set up, the user can access only those menu items (47) or data authorized for this profile, and the other disabled menu items (47) are not displayed or are shown as disabled.

19. Method of setting up a welding apparatus (1) according to one of the preceding claims 1 to 17, where various parameters, functions and/or operating modes of the welding apparatus (1) are set via the operating unit, **characterized in that** all parameters or setting options of the welding apparatus (1) or the welding current source (2) are set via the operating unit and the selection of different parameters, functions and/or operating modes is made in at least one level but preferably two levels, in particular a main level (48) and a working level (49), and these are presented on the display unit in the form of menu items (47) and/or tabs.

20. Method of setting up a welding apparatus (1) according to one of the preceding claims 1 to 17, where various parameters, functions and/or operating modes of the welding apparatus (1), in particular for a welding process, are set via the operating unit, **characterized in that** that when the operating unit is operated using a special switching element (30), in particular a help button or an information button (44), textual information or additional parameters or actual values relating to a selected menu item (47) or the selected tab are retrieved and displayed.

21. Method according to claim 18, 19 or 20, **characterized in that** when a setting is entered or edited, the changes are transmitted to the welding apparatus (1) without having to be explicitly saved.

22. Method according to one of claims 18 to 21, **characterized in that** when the switching elements (30) are operated, a list of different functions or sequences is displayed and at least one respective left/right button (32, 33) is used for horizontal navigation and a respective up/down button (34, 35) for vertical navigation.

23. Method according to one of claims 18 to 22, **characterized in that** when the switching element (30), in particular the menu button (43), is activated, the system is able to switch from every level or from every menu item (47) or tab back to the first level, in particular the main level (48), or into a defined level or tab.

24. Method according to one of claims 18 to 23, **characterized in that** in the first level a vertical navigation is carried out whereas the navigation between the individual tabs is carried out horizontally in the second level or in any other level.

25. Method according to one of claims 18 to 24, **characterized in that** when a menu item (47) or a tab is selected, specific functions are assigned to the switching elements (30), in particular the soft key/memory key buttons (38 to 42).

26. Method of setting up a welding apparatus (1) via an operating unit, where various parameters, functions and/or operating modes for the welding apparatus (1), in particular for a welding process, are set via the operating unit and presented on at least one display unit (31, 51, 52),
**characterized in**
- that the menu items (47) or the tabs are retrieved in an endless loop or a specific number of different menu items (47) or tabs is retrieved one after the other, and a menu item or tab is selected by navigation using switching elements (30), in particular left/right (32, 33) and/or up/down buttons (34, 35) and
- that a function sequence, comprising several setting options, in particular parameters or menu items (47), is presented in form of a function curve (54), so that corresponding selection enables the actual values or desired values to be displayed at the at least one display element (31, 51, 52).

27. Method according to claim 26, **characterized in that** the menu items (47), in particular special parameters, are presented on a display or a front panel (50) of the welding apparatus (1) or on a display unit of a an operating unit.

28. Method according to claim 26 or 27, **characterized in that** a function sequence, in particular a function curve (54), is presented on the front panel (50), for which several parameters or menu items (47) are set, and corresponding setting elements, in particular the left/right buttons (32, 33), are provided or used as a means of horizontally navigating the function curve in order to select and activate the parameters and menu items in the function curve.

29. Method according to one of the preceding claims 26 to 28, **characterized in that** the region of the function curve (54) is formed by an LCD display and the rest of the structure of an input and/or output device (22) is carried out by fixed parameters or menu items.

## Revendications

1. Poste de soudage (1) avec une unité de commande intégrée qui comporte des éléments de réglage ou éléments de commande (30) et au moins un élément d'affichage (31, 51, 52), des mémoires pour le stockage de données, ainsi que des interfaces (46) étant disposées dans le poste de soudage (1), le réglage ou la modification des différents paramètres, fonctions et/ou modes de fonctionnement étant assisté par un menu, caractérisé
- en ce que le déroulement d'une fonction, qui comporte plusieurs possibilités de réglage, en particulier des paramètres ou des sous-menus (47), est configuré sous la forme d'une courbe de fonctionnement (54),
- en ce que pour sélectionner ou activer les paramètres ou des sous-menus (47) dans la courbe de fonctionnement (54), on dispose ou implante des organes de réglage correspondants, en particulier les touches gauche/droite (32, 33), et
- en ce que des éléments d'affichage (55) sont agencés dans le tracé de la courbe de fonctionnement (54), de telle sorte que, par un choix correspondant, les valeurs réelles ou valeurs de consigne sont affichées sur ledit au moins un élément d'affichage (31, 51, 52).

2. Poste de soudage (1) selon la revendication 1, **caractérisé en ce que** l'élément d'affichage (31) est formé par un écran LCD, en particulier un écran LCD pour tracés graphiques.

3. Poste de soudage (1) selon l'une quelconque des revendications précédentes, **caractérisé en ce que** tous les paramètres ou possibilités de réglage du poste de soudage (1) peuvent être réglés sur l'unité de commande ou sont disponibles sur celle-ci.

4. Poste de soudage (1) selon l'une quelconque des revendications précédentes, **caractérisé en ce que** la sélection des différents paramètres ou possibilités de réglage est représentée sous la forme de sous-menus (47) sur le dispositif d'affichage (22).

5. Poste de soudage (1) selon l'une quelconque des revendications précédentes, **caractérisé en ce qu'**au moment de l'activation du poste de soudage (1) au moyen de l'unité de commande, l'utilisateur dispose d'au moins un niveau, de préférence cependant deux niveaux, en particulier un niveau principal (48) et un niveau de travail (49), différents onglets ou sous-menus (47) étant disponibles, lesquels peuvent être sélectionnés par l'intermédiaire d'un élément de réglage ou élément de commande (30).

6. Poste de soudage (1) selon l'une quelconque des revendications précédentes, **caractérisé en ce que** des sous-niveaux supplémentaires sont associés au niveau de travail (49).

7. Poste de soudage (1) selon l'une quelconque des revendications précédentes, **caractérisé en ce que** dans le premier niveau, en particulier dans le niveau principal (48), sont disposées les différentes tâches, telles que le soudage programmé, le soudage manuel, le soudage par électrodes, le soudage TIG, le soudage par lots, l'optimisation des tâches, l'optimisation des courbes caractéristiques, la maintenance.

8. Poste de soudage (1) selon l'une quelconque des revendications précédentes, **caractérisé en ce que** dans le deuxième niveau, en particulier dans le niveau de travail (49), sont disposés les paramètres correspondants, les listes des valeurs, les fonctions.

9. Poste de soudage (1) selon l'une quelconque des revendications précédentes, **caractérisé en ce que** l'unité de commande comporte plusieurs éléments de commande (30), en particulier respectivement une touche gauche/droite (32, 33) pour la navigation horizontale, respectivement une touche vers le haut/le bas (34, 35) pour la navigation verticale, une touche d'aide à l'enfilage du fil (36), une touche de contrôle du gaz (37), plusieurs touches, en particulier cinq touches de fonction/mémoire (38 à 42).

10. Poste de soudage (1) selon l'une quelconque des revendications précédentes, **caractérisé en ce qu'**un élément de commande (30) spécial, en particulier une touche de menu (43), est disposé sur l'unité de commande, l'activation de l'élément de commande (30) permettant de revenir à partir de chaque niveau ou à partir de chaque sous-menu (47) ou onglet vers le premier niveau, en particulier le niveau principal (48), ou vers un niveau défini ou onglet.

11. Poste de soudage (1) selon l'une quelconque des revendications précédentes, **caractérisé en ce qu'**un élément de commande (30) spécial, en particulier une touche d'information (44), est disposé sur l'unité de commande et permet d'afficher un texte d'information pour chaque sous-menu (47) ou onglet.

12. Poste de soudage (1) selon l'une quelconque des revendications précédentes, **caractérisé en ce que** des paramètres ou valeurs réelles supplémentaires peuvent être affichées au moyen de l'élément de commande (30) supplémentaire, en particulier la touche d'information (44).

13. Poste de soudage (1) selon l'une quelconque des revendications précédentes, **caractérisé en ce qu'**un élément de commande (30) supplémentaire, en particulier une touche d'autorisation (45), est disposé sur l'unité de commande.

14. Poste de soudage (1) selon l'une quelconque des revendications précédentes, **caractérisé en ce que** des profils différents peuvent être mis au point pour différents utilisateurs.

15. Poste de soudage (1) selon l'une quelconque des revendications précédentes, **caractérisé en ce qu'**en fonction du profil mis au point, l'utilisateur ne peut accéder qu'aux sous-menus (47) ou onglets validés pour ce profil, les autres sous-menus (47) désactivés étant affichés en gris ou étant notés comme inactifs.

16. Poste de soudage (1) selon l'une quelconque des revendications précédentes, **caractérisé en ce que** les sous-menus (47), les onglets ou la structure d'information peuvent être élargis à tout moment et peuvent donc être ajustés aux modes de réalisation ou demandes spécifiques du client.

17. Poste de soudage (1) selon l'une quelconque des revendications précédentes, **caractérisé en ce qu'**au moment de l'ajustage ou du réglage d'une fonction ou d'un paramètre, la modification est activée immédiatement sans stockage explicite dans la mémoire.

18. Procédé permettant le réglage d'un poste de soudage (1) selon les revendications précédentes 1 à 17, dans lequel l'unité de commande permet de régler différents paramètres, fonctions et/ou modes de fonctionnement pour le poste de soudage (1) et d'attribuer des autorisations différentes aux différents utilisateurs, **caractérisé en ce que** le réglage et l'attribution de l'autorisation ou des profils sont effectués par l'intermédiaire de l'unité de commande, et **en ce que** l'utilisateur, en fonction du profil ou de l'autorisation mis au point, peut accéder uniquement aux sous-menus (47) ou données validés pour ledit profil et les autres sous-menus (47) désactivés sont affichés en gris ou sont notés comme inactifs.

19. Procédé permettant le réglage d'un poste de soudage (1) selon les revendications précédentes 1 à 17, dans lequel l'unité de commande permet de régler différents paramètres, fonctions et/ou modes de fonctionnement pour le poste de soudage (1), **caractérisé en ce que** tous les paramètres ou possibilités de réglage du poste de soudage (1) ou de la source de courant de soudage (2) sont réglés par l'intermédiaire de l'unité de commande, la sélection des différents paramètres, fonctions et/ou modes de fonctionnement étant effectuée dans au moins un niveau, de préférence cependant dans deux niveaux, en particulier dans un niveau principal (48) et dans un niveau de travail (49), et ceux-ci étant représentés sous la forme de sous-menus (47) et/ou onglets sur le dispositif d'affichage.

20. Procédé permettant le réglage d'un poste de soudage (1) selon les revendications précédentes 1 à 17, dans lequel l'unité de commande permet de régler différents paramètres, fonctions et/ou modes de fonctionnement pour le poste de soudage (1), en particulier pour un processus de soudage, **caractérisé en ce que** l'activation d'un élément de commande (30) spécial, en particulier une touche d'aide ou une touche d'information (44) relative à un sous-menu (47) sélectionné ou à un onglet sélectionné, permet d'afficher et de visualiser sur l'unité de commande un texte d'information ou des paramètres ou valeurs réelles supplémentaires.

21. Procédé selon les revendications 18, 19 ou 20, **caractérisé en ce que** lors d'un ajustage ou réglage sans stockage explicite dans la mémoire, les modifications sont transmises au poste de soudage (1).

22. Procédé selon l'une quelconque des revendications 18 à 21, **caractérisé en ce que** l'activation des éléments de commande (30) permet de mettre en oeuvre différentes fonctions ou différents déroulements de programme, au moins une touche gauche/droite (32, 33) pour la navigation horizontale et respectivement une touche vers le haut/le bas (34, 35) pour la navigation verticale étant utilisées.

23. Procédé selon l'une quelconque des revendications 18 à 22, **caractérisé en ce que** l'activation de l'élément de commande (30), en particulier la touche de menu (43), permet de revenir à partir de chaque niveau ou à partir de chaque sous-menu (47) ou onglet vers le premier niveau, en particulier vers le niveau principal (48), ou vers un niveau défini ou un onglet défini.

24. Procédé selon l'une quelconque des revendications 18 à 23, **caractérisé en ce que** dans le premier niveau s'effectue une navigation verticale, alors que dans le deuxième niveau ou dans chaque niveau supplémentaire s'effectue la navigation s'effectue horizontalement entre les différents onglets.

25. Procédé selon l'une quelconque des revendications 18 à 24, **caractérisé en ce que** lors de la sélection d'un sous-menu (47) ou d'un onglet, des fonctions déterminées sont associées aux éléments de commande (30), en particulier à la touche de fonction/mémoire (38 à 42).

26. Procédé permettant le réglage d'un poste de soudage (1) au moyen d'une unité de commande, dans lequel différents paramètres, fonctions et/ou modes de fonctionnement pour le poste de soudage (1), en particulier pour un processus de soudage, peuvent être réglés par l'intermédiaire de l'unité de commande et peuvent être affichés par l'intermédiaire d'au moins un élément d'affichage (31, 51, 52),
caractérisé
- en ce que les sous-menus (47) ou onglets sont appelés dans une boucle sans fin ou un nombre déterminé de sous-menus (47) ou onglets sont appelés les uns après les autres, la navigation pour sélectionner un sous-menu (47) ou un onglet étant effectuée par l'intermédiaire des éléments de commande (30), en particulier par l'intermédiaire de touches gauche/droite (32, 33) et/ou de touches vers le haut/le bas (34, 35), et
- en ce que le déroulement d'une fonction, qui comporte plusieurs possibilités de réglage, en particulier des paramètres ou sous-menus (47), est représenté sous la forme d'une courbe de fonctionnement (54), de telle sorte que, par un choix correspondant, les valeurs réelles ou valeurs de consigne sont affichées sur ledit au moins un élément d'affichage (31, 51, 52).

27. Procédé selon la revendication 26, **caractérisé en ce que** les sous-menus (47), en particulier des paramètres spéciaux, sont affichés sur un écran ou une plaque frontale (50) du poste de soudage (1) ou sur un dispositif d'affichage d'une unité de commande.

28. Procédé selon la revendication 26 ou 27, **caractérisé en ce que** sur la plaque frontale (50) est représenté le déroulement d'une fonction, en particulier une courbe de fonctionnement (54), pour laquelle sont réglés plusieurs paramètres ou sous-menus (47), une navigation horizontale en relation avec la courbe de fonctionnement (54) étant formée de telle sorte que pour sélectionner ou activer les paramètres ou sous-menus (47) dans la courbe de fonctionnement (54), on agence ou implante des organes de réglage correspondants, en particulier les touches gauche/droite (32, 33).

29. Procédé selon l'une quelconque des revendications 26 à 28, **caractérisé en ce que** la zone de la courbe de fonctionnement (54) est formée par un afficheur LCD et la structure restante d'un dispositif d'entrée et/ou de sortie (22) est configurée par des paramètres ou sous-menus définis de manière fixe.
